**Europäisches Patentamt**

**European Patent Office**

**Office européen des brevets**

(19)

(11) Publication number : **0 239 150 B1**

# (12) EUROPEAN PATENT SPECIFICATION

(45) Date of publication of patent specification :
**04.03.92 Bulletin 92/10**

(51) Int. Cl.⁵ : **H01J 29/00**

(21) Application number : **87200369.4**

(22) Date of filing : **02.03.87**

(54) Device for projecting a television picture onto a screen.

(30) Priority : **25.03.86 NL 8600752**

(43) Date of publication of application :
**30.09.87 Bulletin 87/40**

(45) Publication of the grant of the patent :
**04.03.92 Bulletin 92/10**

(84) Designated Contracting States :
**DE FR GB IT**

(56) References cited :
**EP-A- 0 111 979**
**EP-A- 0 162 971**
**GB-A- 2 134 702**

(73) Proprietor : **N.V. Philips'**
**Gloeilampenfabrieken**
**Groenewoudseweg 1**
**NL-5621 BA Eindhoven (NL)**

(72) Inventor : **Vriens, Leendert**
**INT. OCTROOIBUREAU B.V. Prof. Holstlaan 6**
**NL-5656 AA Eindhoven (NL)**
Inventor : **Gerritsen, Gerrit B.**
**INT. OCTROOIBUREAU B.V. Prof. Holstlaan 6**
**NL-5656 AA Eindhoven (NL)**

(74) Representative : **Koppen, Jan et al**
**INTERNATIONAAL OCTROOIBUREAU B.V.**
**Prof. Holstlaan 6**
**NL-5656 AA Eindhoven (NL)**

## Description

The invention relates to a device for projecting colour pictures onto a projection screen comprising three juxtaposed picture tubes forming an assembly, each picture tube comprising a display window having a display screen provided on the inside thereof and a light transmissive element arranged at a distance in front of the display window which element together with the display window bounds a cooling space in front of the display window for passing through a coolant, in said device the centre lines of the screens of the juxtaposed picture tubes enclose an angle. The light-transmissive element may be a window or a part of a lens system within the scope of the invention.

A device having three juxtaposed television picture tubes is known from British Specification 2,134, 702 in which the flow spaces are arranged in series and in which a pump is used for passing through the coolant. Chambers constituting the connection between the successive flow spaces are located between the juxtaposed television picture tubes. This system is suitable for an energy dissipation of 60 to 80 watts per tube and has a satisfactory operation.

For many conventional uses, however, such a construction is too expensive whilst a considerably smaller heat dissipation can suffice. In the present-day projectors for consumer uses an energy dissipation of 10 to 20 W per tube is common practice.

A device suitable for a smaller heat dissipation up to 25 to 30 W per tube is described in European Patent Application 0,162,971. This Application describes a free convection cooling in which a closed liquid cooling system is provided around the front side of the tube. The coolant flows upwards in front of the tube and flows back via a passage provided near the upper side of the tube and via further passages provided along the sides of the tube to a passage arranged under the tube from which the liquid can flow upwards again. The air circulating freely around the cooling system ensures a sufficient cooling of the liquid flowing through the passages from the upper side of the tube to the lower side of the tube. For a satisfactory operation it is required that the passages have a sufficiently large cross-section. This implies that the distance between the juxtaposed tubes is influenced to a considerable extent by the cross-section of the passages for the flow of the coolant extending along the sides of the tubes.

In connection with an optimum arrangement of the tubes with a view to obtaining the smallest possible distortions in the image on the projection screen it is required to have the smallest possible angles between the centre lines of the tubes among themselves and it is therefore desirable to arrange the tubes as closely together as possible.

According to the invention a device as described in the opening paragraph is characterized in that said device comprises a common frame supporting and surrounding the assembly of the three picture tubes, said frame forming a closed cooling system for passing through the coolant through said cooling spaces and for returning the coolant from outlet openings to inlet openings of said cooling spaces via a back flow system, said back flow system common to the three picture tubes integrally includes a first duct extending along a first side common to all three display windows of the three juxtaposed picture tubes, said first duct being in direct communication via said inlet openings with said cooling space of each picture tube, and a second duct extending along a second common side, opposite to the first common side of the three display windows, said second duct being in direct communication via said outlet openings with said cooling space of each picture tube, said outlet openings being situated on the side opposite to the inlet openings, and at least one connection duct connecting said first and second ducts and extending respectively along one side of the assembly which is common to only one display window of the three juxtaposed picture tubes.

When the construction according to the invention is used, the television pictures tubes can be arranged closely together while yet achieving an effective convection cooling, because the liquid heated by the three display screens and rising in front of the display windows can be passed for the purpose of cooling through a system of ducts bypassing the picture tubes and, after having being cooled to a sufficient extent is applied again to the lower sides of the picture tubes. This system of ducts bypassing the picture tubes can be formed with a sufficiently large cross-section and with sufficiently large cooling surfaces without affecting the mutual distance between the display tubes.

Some embodiments of the invention will now be described in greater detail with reference to the drawing.

Figure 1 shows partly in a plan view and partly in a cross-section a first embodiment of an assembly of three television picture tubes having an integrated cooling which with associated lens systems are supported by a common frame;

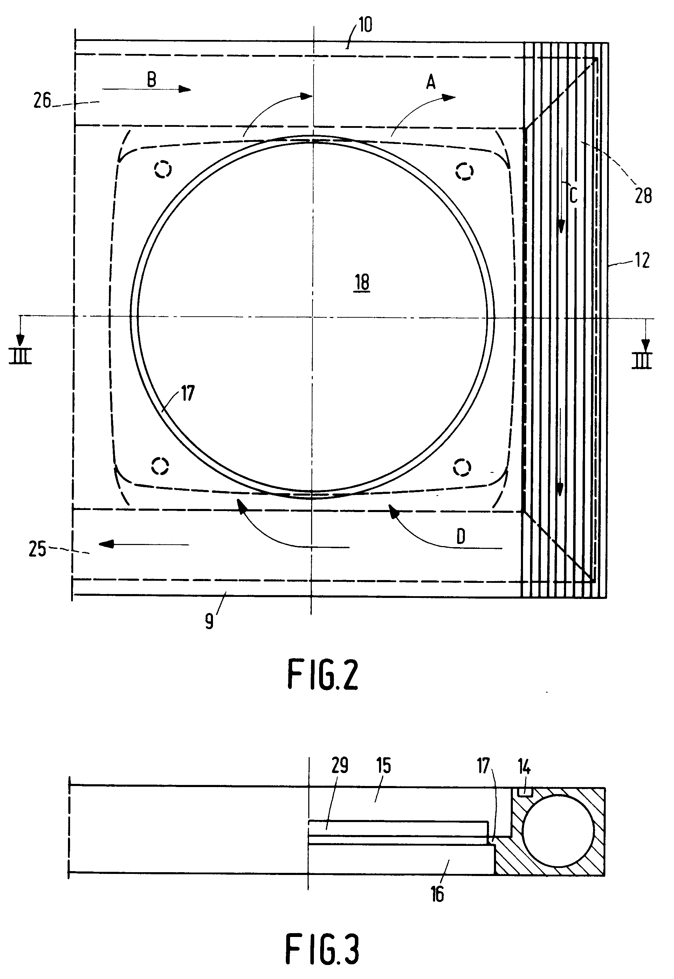

Figure 2 is an elevational view of an end portion of the frame of the assembly of Figure 1 in which the lens systems and the picture tubes, viewed in the direction of the arrow II in Figure 1 have been omitted;

Figure 3 is a cross-section of Figure 2 taken on the line III-III in Figure 2;

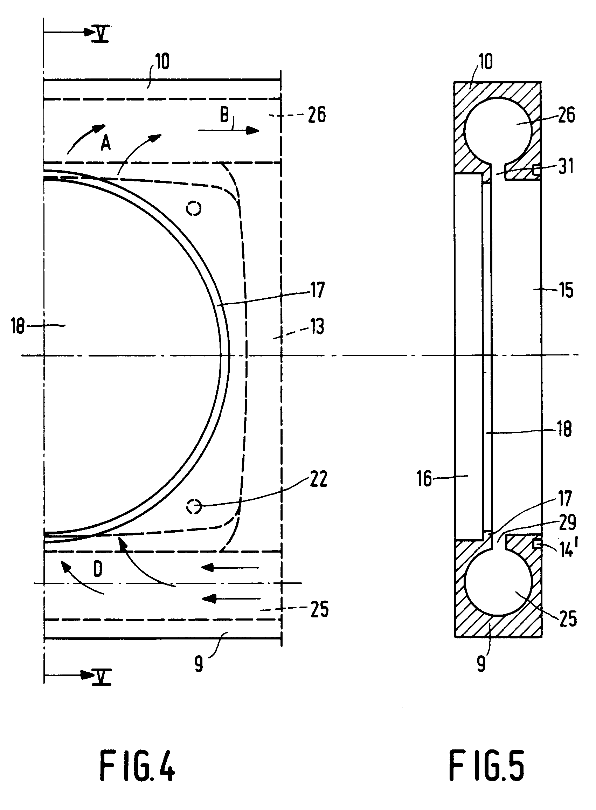

Figure 4 is an elevational view of a central portion of the frame while omitting the lens systems and the television picture tubes, viewed in the direction of the arrow IV in Figure 1;

Figure 5 is a cross-section of Figure 4 taken on the line V-V in Figure 4;

Figure 6 shows partly in a plan view and partly in a cross-section a second embodiment of an assembly of three television picture tubes with integrated cooling, which with associated lens systems are supported by a common frame;

Figure 7 is an elevational view of the frame of the assembly of Figure 6 while omitting the lens systems and picture tubes viewed in the direction of the arrow VII in Figure 6.

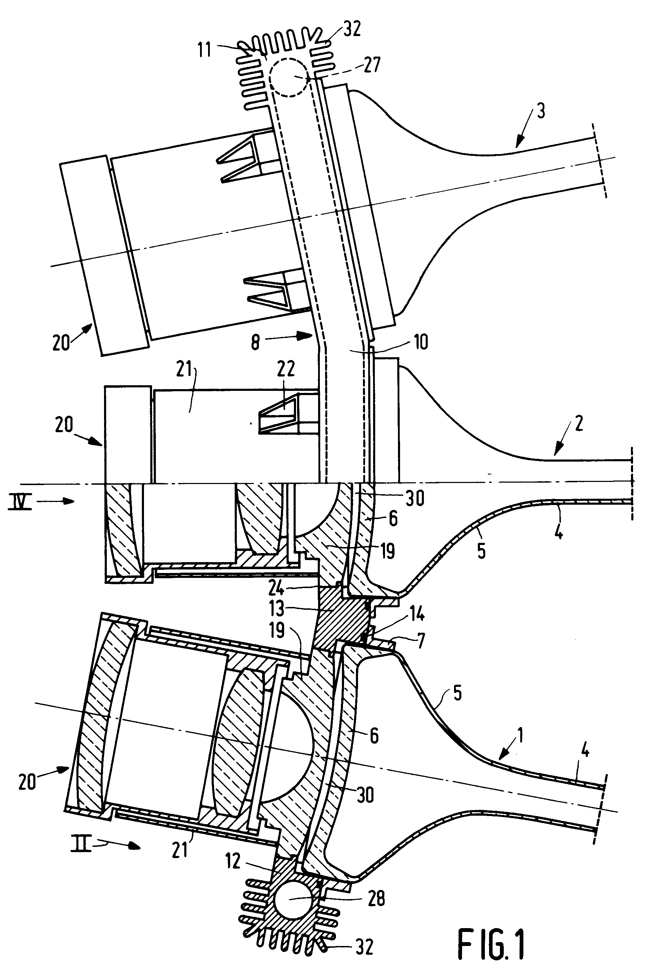

The device shown in Figure 1 comprises in a conventional manner three television picture tubes 1-3 each having a neck 4, a conical portion 5 and a display window 6 having a display screen provided on its inner side in a manner not shown.

Each tube is surrounded near the display window 6 by a connection profile 7 which is L-shaped in cross-section and is secured to the outer circumference of the relevant picture tube in such a manner that it does not pass liquid.

The picture tubes are supported by a metal frame 8, for example, of aluminiun. The metal frame 8 has a lower hollow bar 9 and an upper hollow bar 10 extending parallel thereto. The ends of the two bars 9 and 10 are connected together by connection parts 11 and 12 which are likewise hollow and which together with the bars 9 and 10 constitute a rectangular frame. The two bars 9 and 10 are also connected together by solid connection parts 13 extending parallel to the bars 11 and 12. The end of the picture tube 1 comprising the display window 6 is incorporated in a recess in the frame 8, which recess is bounded by parts of the bars 9 and 10 and connection parts 12 and 13. Similarly, the end comprising the display window of the picture tube 3 is incorporated in a recess in the frame 8, which recess is bounded by parts of the bars 9 and 10 and connection parts 11 and 13. Finally, the end comprising the display window of the tube 2 is located in a recess bounded by the central portions of the bars 9 and 10 and the two parts 13. The picture tubes are secured to the frame with the aid of fillets 7 surrounding the picture tubes with the interpositioning of a packing 14 incorporated in a groove 14' provided for that purpose in the frame 8, so that a liquid tight connection between the fillets 7 and the frame 8 is formed.

Each rectangular portion 15 of the recess for incorporating one end of a picture tube changed into a portion 16 having a round cross-section of the relevant recess, a circular edge 17 being provided near the transition between the portions 15 and 16, which edge bounds a round hole 18 having a smaller diameter than portion 16.

A lens 19 of a lens system 20 is located in the hole 18 and the portion 16. The outer circumference of the lens 19 is formed stepwise, as is particularly apparent from Figure 1, so that the outer circumference of the lens tightly fits in the hole 18 and the recess 16.

The lens system 20 has a jacket 21 provided with supports 22 which are secured to the frame 8 with bolts not shown whose screwthread ends are screwed into threaded holes 22 provided in the frame. By providing a sealing connection 24 around the lens 19 a liquid tight connection between the lens 19 and the frame 8 is obtained.

A passage 25 is provided in the lower bar 9 of the frame 8 and a passage 26 is provided in the upper bar 10. Both passages 25 and 26 extend throughout the length of the bars 9 and 10 and their ends are connected by means of passages 27 and 28 extending through the connection parts 11 and 12, respectively.

At the area of each recess 14 a slit-shaped aperture 29 is provided in the upper wall of the hollow bar 9, which aperture constitutes a connection between the passage 25 and a space 30 (Figure 1) bounded by the display window 6 and the lens 19. This space 30 is in open communication with the passage 26 provided in the bar 10 via a slit-shaped aperture 31 provided in the lower wall of the bar 10. The length of the slit-shaped apertures or slotted holes 29 and 31 is approximately equal to the width of the display window 6.

The passages 25-28 and the spaces 30 are filled with a suitable liquid. A mixture of ethylene glycol:water may be used as a coolant with a mixing ratio of preferably between 1:1 and 4:1. When the device is used the liquid present in the spaces 30 will be heated and consequently it will flow upwards through the spaces 30 to the passage 26 as is indicated by the arrows A. In the upper passage the liquid, as indicated by the arrows B, will flow to the ends of a passage 26 and from this passage it will flow down via the passages 27 and 28, as is indicated by arrows C, to the passage 25 whence the liquid, as indicated by arrows D, flows into the spaces 30 again. To realize a satisfactory cooling of the liquid flowing through the passages, the relevant components such as, for example, the connection parts 11 and 12 may be provided with cooling ribs 32.

By using the construction according to the invention an effective cooling can be realized with a concise structure of the frame and picture tubes which are closely arranged so that the temperature can be kept at a proportionally low level while preventing large temperature differences over the height of the spaces 30. This makes it also possible to bound the flow space on the side remote from the picture tube directly by a lens of the lens system so that the use of a separate transparent sealing plate for sealing the flow space can be dispensed with.

The frame 8 may be made of one piece, but also of separate components which are appropriately secured by using securing means or by welding and/or adhesive connections.

The above described embodiment of the invention is particularly suitable when two conditions are satisfied. Firstly, when the axis of the three tubes constitutes a sufficiently large angle with the vertical direction, for example, larger than 10 to 20 degrees in which case the coolant in front of the display screens of the tubes has a sufficiently slanting position to initiate a free convection caused by temperature differences. Secondly, when the outside of the display screen and the side of the second light transmissive window in this case the first lens element facing that side are in parallel with each other. The latter is the case in the device according to Figure 1. This parallel position implies that the differences in refractive index caused by temperature differences in the coolant are less critical.

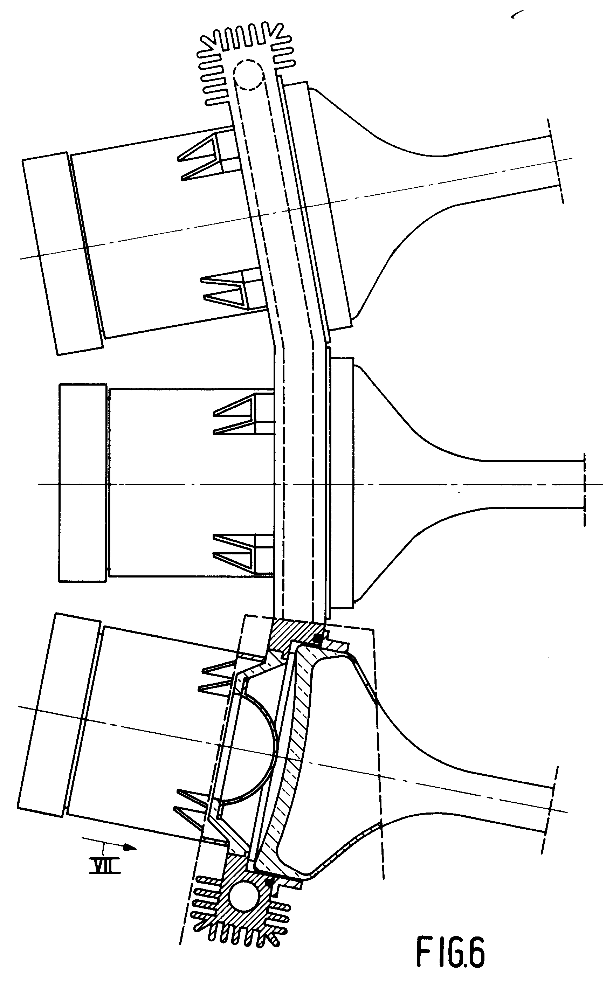

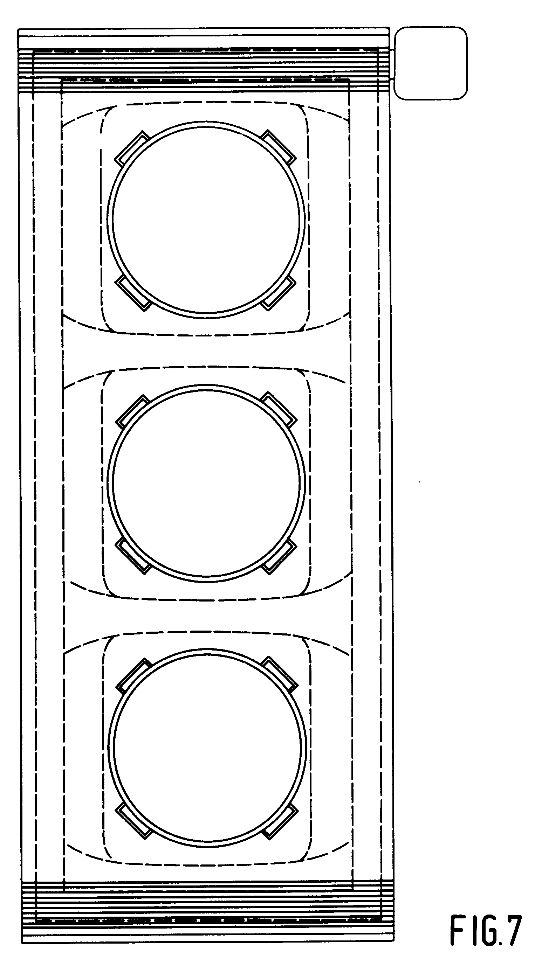

A second embodiment of the invention is a variant of the first embodiment in which the cooling duct which is common for the three tubes, for example, the passage on one of the sides incorporates a small liquid pump to accelerate the flow of the coolant. The capacity of the liquid pump is to be preferably in the range between 0.5 and 3 cc/sec. The passage on the other side then works less effectively and may be dispensed with. As is common practice in projection television apparatus the projection tube provided with a green emitting phosphor is placed in the centre and the tubes provided with blue and red phosphors are placed on either side. Since in the present state of the art concerning phosphors the tube provided with the blue phosphor is to be subjected to a higher load than the tube provided with the red phosphor, the pump will be preferably placed on the side of the blue tube. With respect to the first embodiment of the invention the second embodiment is more complicated due to the presence of the extra pump. However, advantages are that the diameter of the passages around the three tubes can be reduced and that the second embodiment is also suitable when the axis of the tubes constitutes a small angle with the vertical. The second embodiment is, however, particularly suitable when the outside of the display screen and the inside of the first lens element are no longer in parallel. Figures 6 and 7 show an example of such a device. As compared with the device shown in Figure 1 there are three differences. Firstly the solid first lens element in Figure 1 whose thickness varies considerably with the distance to the optical axis is replaced by a thin meniscus lens in Figure 6. Secondly, the passages in Figures 6 and 7 have a smaller diameter. Thirdly, Figure 7 shows a pump.

A great advantage of the thin meniscus lens is that it can be manufactured in a much simpler and less expensive way than a thick first lens element commonly used for projection television (the so-called field flattener). As is apparent from Figure 6, a drawback is that the coolant in front of the display screen varies considerably in thickness and hence in addition to cooling also functions as a lens. Temperature differences and hence differences in density and refractive index in the coolant are therefore much more critical. The acceleration of the laminar liquid flow by means of a small pump in accordance with the second embodiment of the invention will considerably reduce these temperature differences and therefore provide the possibility or facilitate the use of meniscus lenses. In the second embodiment of the invention the display screen may either be flat or be curved towards the vacuum side. The latter possibility is shown in Figure 6.

In the two embodiments it is recommendable to provide an expansion space in order to compensate for the expansion of the coolant caused by an increase of the temperature of this liquid.

In summary the following principal features of the cooling system according to the invention can be mentioned :

1) the cooling which is integrated for three projection television tubes in which the tubes are in parallel as far as cooling is concerned so that the flow resistance is at a minimum,

2) the absence of coolant or cooling fins between the three tubes so that they can be placed closely beside each other and so that optical image errors are at a minimum,

3) the use of either free convection cooling without a pump as in embodiment 1, or only a pump for simultaneous cooling of the three tubes combined as in embodiment 2,

4) possible use of only one expansion space for the three tubes combined.

## Claims

1. A device for projecting colour pictures onto a projection screen comprising three juxtaposed picture tubes (1, 2, 3) forming an assembly, each picture tube comprising a display window (6) having a display screen provided on the inside thereof and a light transmissive element (19) arranged at a distance in front of the display window (6) which element (19) together with the display window (6) bounds a cooling space (30) in front of the display window (6) for passing through a coolant, in said device the centre lines of the screens of the juxtaposed picture tubes (1, 2, 3) enclose an angle, characterized in that said device comprises a common frame (8, 9, 10, 11, 12, 13) supporting and surrounding the assembly of the three picture tubes (1, 2, 3), said frame forming a closed cooling system for passing through the coolant through said cooling spaces (30) and for returning the coolant from outlet openings (31) to inlet openings (29) of said cooling spaces (30) via a back flow system, said back flow system common to the three picture tubes integrally includes a first duct (25) extending along a first side common to all three display windows (6) of the three juxtaposed picture tubes, said first duct (25) being in direct communication via said inlet openings (29) with said cooling space (30) of each picture tube (1, 2, 3), and a second duct (26) extending along a second common side, opposite to the first common side of the three display windows (6), said second duct (26) being in direct communication via said outlet openings (31) with said cooling space (30) of each picture tube, said outlet openings (31) being situated on the side opposite to the inlet openings (29), and at least one connection duct (27, 28) connecting said first and second ducts (25, 26) and extending respectively along one side of the assembly which is common to only one display window of the three juxtaposed picture tubes (1, 2, 3).

2. A device as claimed in Claim 1, characterized in that the first duct (25) and the second duct (26) at their both ends are connected by a connection duct (27, 28).

3. A device as claimed in Claim 1, characterized in that the frame (8) comprises longitudinal bars (9, 10) extending along said first and second common sides, which bars (9, 10) are connected by means of connection parts (11, 12, 13) at their ends and between the television picture tubes ( 1, 2, 3).

4. A device as claimed in Claim 3, characterized in that the frame (8) is provided with recesses located at a distance from each other and between the connection parts (11, 12, 13), in which recesses one end of a television picture tube (1, 2, 3) is inserted from one side, whilst the recess on the other side is shut off by the light-transmissive element (19).

5. A device as claimed in Claim 3 or 4, characterized in that the first duct (25) and second duct (26) are provided in the longitudinal bars (9, 10) of the frame (8) and communicate with the flow space (30) of each picture tube ( 1, 2, 3) via slotted holes (29, 31) extending in the longitudinal direction of the longitudinal bars (9, 10) and provided in the facing sides of said longitudinal bars (9, 10).

6. A device as claimed in any one of Claims 3-5, characterized in that the connection parts (11, 12, 13) at least comprising the connection ducts (27, 28) and connecting the ends of the longitudinal bars (9, 10) are provided with cooling ribs (32).

7. A device as claimed in any one of Claims 2-6, characterized in that the surface area of each light-transmissive element (19), e.g. the first lens element of a lens system (20), facing the corresponding picture tube is parallel to the outside of the display window (6).

8. A device as claimed in any one of Claims 2-6, characterized in that the surface area of each light-transmissive element (19), e.g.the first element of a lens system (20), facing the corresponding picture tube is not parallel to the outside of the display window (6).

9. A device as claimed in any one of Claims 2-6 and 8, characterized in that one of the connection ducts (27, 28) incorporates a small liquid pump.

10. A device as claimed in any one of Claims 2-9, characterized in that the connection ducts (27, 28) are in open communication with a small expansion space.

## Patentansprüche

1. Anordnung zum Projizieren van Farbbildern auf einen Projektionsschirm mittels drei nebeneinander liegender und eine Einheit bildender Bildwiedergaberöhren (1,2,3), wobei jede Bildwiedergaberöhre ein Bildfenster (6) mit einem an seiner Innenseite angeordneten Bildschirm und ein durchsichtiges Element (19) im Abstand vor dem Bildfenster (6) besitzt, welches Element (19) zusammen mit dem Bildfenster (6) einen Kühlraum (30) vor dem Bildfenster (6) zum Durchlassen eines Kühlmittels begrenzt, und in welcher Anordnung die Mittellinien der Schirme der nebeneinanderliegenden Bildwiedergaberöhren (1, 2, 3) einen Winkel zueinander einschließen, dadurch gekennzeichnet, daß die Anordnung einen gemeinsamen Rahmen (8, 9, 10, 11 ,12, 13) zum Tragen und Umgeben der Einheit der drei Bildwiedergaberöhren (1, 2, 3) enthält, welcher Rahmen ein geschlossenes Kühlsystem bildet zum Durchlassen des Kühlmittels durch die Kühlräume (30) und zum Zurückfließenlassen des Kühlmittels von Austrittsöffnungen (31) nach Eintrittsöffnungen (29) der Kühlräume (30) über ein Rückflußsystem, das den drei Bildwiedergaberöhren gemeinsam ist und integral einen ersten Kanal (25), der sich längs einer ersten Seite erstreckt, die allen drei Bildfenstern (6) der drei nebeneinanderliegenden Bildwiedergaberöhren gemeinsam ist, und über die Eintrittsöffnungen (29) mit dem Kühlraum (30) jeder Bildwiedergaberöhre (1, 2, 3) in direkter Verbindung steht, und einen zweiten Kanal (26) umfaßt, der sich längs einer zweiten gemeinsamen Seite gegenüber der ersten gemeinsamen Seite der drei Bildfenster (6) erstreckt, und über die Austrittsöffnungen (31) mit dem Kühlraum (30) jeder Bildwiedergaberöhre in direkter Verbindung steht, wobei die Austrittsöffnungen (31) sich an der den Eintrittsöffnungen (29) gegenüber liegenden Seite befinden, und wobei wenigstens ein Verbindungskanal (27, 28) die ersten und zweiten Kanäle (25, 26) miteinander verbindet, welches Kanal sich an einer Seite der Anordnung erstreckt, die nur einem Bildfenster der drei nebeneinanderliegenden Bildwiedergaberöhren gemeinsam ist.

2. Anordnung nach Anspruch 1, dadurch gekennzeichnet, daß der erste Kanal (25) und der zweite Kanal (26) an ihren beiden Enden durch einen Verbindungskanal (27, 28) miteinander verbunden sind.

3. Anordnung nach Anspruch 1, dadurch gekennzeichnet, daß der Rahmen (8) längliche Balken (9, 10) enthält, die sich entlang der ersten und zweiten gemeinsamen Seiten erstrecken und mittels Verbindungsteile (11, 12, 13) an ihren Enden und zwischen den Fernsehbildwiedergaberöhren (1, 2, 3) verbunden sind.

4. Anordnung nach Anspruch 3, <u>dadurch gekennzeichnet</u>, daß der Rahmen (8) im Abstand voneinander angebrachte Aussparungen zwischen den Verbindungsteilen (11, 12, 13) aufweist, wobei in diese Aussparungen ein Ende einer Fernsehbildwiedergaberöhre ( 1, 2, 3) von einer Seite eingeführt ist, während die Aussparung an der anderen Seite vom durchsichtigen Element (19) abgeschlossen wird.

5. Anordnung nach Anspruch 3 oder 4, <u>dadurch gekennzeichnet</u>, daß der erste Kanal (25) und der zweite Kanal (26) in den länglichen Balken (9, 10) des Rahmens (8) vorgesehen sind und mit dem Flußraum (30) jeder Bildwiedergaberöhre (1, 2, 3) über Schlitzlöcher (29, 31) in Verbindung stehen, die sich in der Längsrichtung der länglichen Balken (9, 10) erstrecken und in den Vorderseiten der länglichen Balken (9,10) angebracht sind

6. Anordnung nach einem der Ansprüche 3... 5, <u>dadurch gekennzeichnet</u>, daß die Verbindungsteile (11, 12, 13), die wenigstens die Verbindungskanäle (27, 28) umfassen und die Enden der länglichen Balken (9, 10) miteinander verbinden, mit Kühlrippen (32) versehen sind.

7. Anordnung nach einem der Ansprüche 2...6, <u>dadurch gekennzeichnet</u>, daß der Oberflächenbereich jedes durchsichtiges Elements (19), z.B. dem ersten Linsenelement eines Linsensystems (20), das der entsprechenden Bildwiedergaberöhre zugewandt ist, zur Außenseite des Bildfensters (6) parallel verläuft.

8. Anordnung nach einem der Ansprüche 2... 6, <u>dadurch gekennzeichnet</u>, daß der Oberflächenbereich jedes durchsichtiges Elements (19), z.B. dem ersten Linsenelement eines Linsensystems (20), das der entsprechenden Bildwiedergaberöhre zugewandt ist, zur Außenseite des Bildfensters (6) nicht parallel verläuft.

9. Anordnung nach einem der Ansprüche 2... 6 und 8, <u>dadurch gekennzeichnet</u>, daß einer der Verbindungskanäle (27, 28) eine kleine Flüssigkeitspumpe enthält.

10. Anordnung nach einem der Ansprüche 2...6, <u>dadurch gekennzeichnet</u>, daß die Verbindungskanäle (27, 28) mit einem kleinen Dehnungsraum in offener Verbindung stehen.

## Revendications

1. Dispositif pour la projection d'images en couleur sur un écran de projection comportant trois tubes images juxtaposés (1, 2, 3) constituant un ensemble, chaque tube image présentant une fenêtre image (6) munie d'un écran image appliqué sur les surfaces intérieures de ladite fenêtre image (6) et un élément transmettant la lumière (19) disposé à une distance devant la fenêtre image, lequel élément (19) délimite, ensemble avec la fenêtre image (6), une enceinte de refroidissement (30) devant la fenêtre image (6) pour le passage d'un liquide de refroidissement, les axes géométriques des écrans des tubes images juxtaposés (1, 2, 3) dans ledit dispositif enfermant un angle, caractérisé en ce que ledit dispositif comprend un châssis commun (8, 9, 10, 11, 12, 13) supportant et entourant l'ensemble des trois tubes images (1, 2, 3), ledit châssis constituant un système de refroidissement fermé pour le passage du liquide de refroidissement à travers lesdites enceintes de refroidissement (30) et pour le retour du liquide de refroidissement à partir d'orifices d'évacuation (31) vers des orifices d'admission (29) desdites enceintes de refroidissement (30) par l'intermédiaire d'un système de reflux, ledit système de relux commun aux trois tubes images comprend un premier canal (25) s'étendant le long d'une première face commune à toutes les trois fenêtres images (6) des trois tubes images juxtaposés, le premier canal (25) communiquant de façon directe par l'intermédiaire desdits orifices d'admission (29) avec ladite enceinte de refroidissement (30) de chaque tube image (1, 2, 3), et un deuxième canal (26) s'étendant le long d'une deuxième face commune, vis-à-vis de la première face commune des trois fenêtres images (6), ledit deuxième canal (26) communiquant de façon directe par l'intermédiaire d'orifices d'évacuation (31) avec ladite enceinte de refroidissement (30) de chaque tube image, lesdits orifices d'évacuation (31) étant situés sur la face vis-à-vis des orifices d'admission (29) et au moins un canal de communication (27, 28) reliant lesdits premier et deuxième canaux (25, 26) et s'étendant respectivement le long d'une face de l'ensemble commune à seule une fenêtre image des trois tubes images juxtaposés (1, 2, 3).

2. Dispositif selon la revendication 1, caractérisé en ce que le premier canal (25) et le deuxième canal (26) sont reliés à leurs extrémités par un canal de communication (27, 28).

3. Dispositif selon la revendication 1, caractérisé en ce que le châssis (8) comporte des poutres longitudinales (9, 10) s'étendant le long desdites premières et deuxièmes faces communes, lesquelles poutres (9, 10) sont reliées à l'aide d'éléments de jonction (11, 12, 13) à leurs extrémités et entre les tubes images de télévision (1, 2, 3).

4. Dispositif selon la revendication 3, caractérisé en ce que le châssis (8) est muni d'évidements espacés situés entre les éléments de jonction (11, 12, 13), évidements dans lesquels est insérée une extrémité d'un tube image de télévision (1, 2, 3) à partir d'un côté, alors que l'évidement de l'autre côté est fermé par l'élément transmettant la lumière (19).

5. Dispositif selon la revendication 3 ou 4, caractérisé en ce que le premier canal (25) et le deuxième canal (26) sont disposés dans les poutres longitudinales (9, 10) du châssis (8) et communiquent avec l'enceinte de circulation (30) de chaque tube image (1, 2, 3) par l'intermédiaire de trous en forme de fente (29, 31) s'étendant dans la direction longitudinale des poutres longitudinales (9, 10) et réalisés dans les faces en vis-à-vis desdites poutres longitudinales (9, 10).

6. Dispositif selon l'une des revendications 3 à 5, caractérisé en ce que les éléments de jonction (11, 12, 13) comportant au moins les canaux de communication (27, 28) et reliant entre elles les extrémités des poutres longitudinales (9, 10) sont munis d'ailes de refroidissement (32).

7. Dispositif selon l'une des revendications 2 à 6, caractérisé en ce que la surface de chaque élément transmettant la lumière (19), par exemple le premier élément d'un système de lentille (20) situé vis-à-vis du tube image correspondant, est parallèle à la face extérieure de la fenêtre image 6.

8. Dispositif selon l'une des revendications 2 à 6, caractérisé en ce que la surface de chaque élément transmettant la lumière (19), par exemple le premier élément d'un système de lentille (20) situé vis-à-vis du tube image correspondant, n'est pas parallèle à la face extérieure de la fenêtre image 6.

9. Dispositif selon l'une des revendications 2 à 6 et 8, caractérisé en ce que l'un des canaux de communication (27, 28) comporte une petite pompe à liquide.

10. Dispositif selon l'une des revendications 2 à 9, caractérisé en ce que les canaux de communication (27, 28) communiquent librement avec une petite enceinte à détente.

FIG.1

FIG.2

FIG.3

FIG. 4

FIG. 5

FIG.6

FIG.7